# EUROPEAN PATENT SPECIFICATION

(11) **EP 3 406 488 B1**
(45) Date of publication and mention of the grant of the patent: **01.07.2020**
(21) Application number: 18174131.5
(22) Date of filing: 24.05.2018
(51) Int. Cl.: B60R 1/062, B60R 1/00, B60R 11/04

(54) **EXTERNAL REAR VIEW DEVICE WITH MOVEABLE HEAD ASSEMBLY**
AUSSENRÜCKSICHTVORRICHTUNG MIT BEWEGLICHER KOPFANORDNUNG
RÉTROVISEUR EXTERNE À TÊTE MOBILE

(30) Priority: 24.05.2017 US 201715603751
(43) Date of publication of application: 28.11.2018
(73) Proprietor: SMR Patents S.à.r.l., 2453 Luxembourg (LU)
(72) Inventor: Lettis, Andrew, Portchester, Hampshire PO 16 9SD (GB); Rehill, Graham, Portchester, Hampshire PO 16 9SD (GB); Scott-Collins, Callum, Portchester, Hampshire PO 16 9SD (GB)
(74) Representative: Weber-Bruls, Dorothée

(56) References cited:
- EP-A1- 3 321 132
- EP-B1- 2 492 144
- DE-A1- 10 218 821
- JP-A- H09 136 574
- JP-A- 2004 082 918
- JP-A- 2006 103 663
- JP-A- 2007 145 041
- JP-A- 2008 221 980
- JP-A- 2013 060 172
- US-A1- 2004 114 262

## Description

The invention relates to an external rear view device for a motor vehicle. The rear view device includes a fixed base assembly provided for arrangement on the motor vehicle and a moveable head assembly attached to the base assembly via an articulation assembly, the articulation assembly comprising a fixed part rigidly attached to the fixed base assembly and a moveable part rigidly attached to the moveable head assembly.

European Patent No. 2 492 145 B1 describes an external rear view mirror with a mirror head and a mirror base, which are covered with at least one body element in the form of a body frame, a body cap and a mirror base cover, and a mirror glass that is installed rigidly relative to the mirror head. The mirror head rests on the mirror base, the body cover of the mirror head is composed of multiple pieces of the body frame and the body cap, and the mirror base is equipped with a mirror base cover, where the body cap has an opening designed for the passage of the mirror base and the mirror base cover. The mirror base is rigidly connected to a mirror carrier that carries an electrical glass adjustment drive, where the glass adjustment drive is connected to at least one body element.

Another external rear view mirror assembly for a motor vehicle includes a mirror base or foot provided for arrangement on the motor vehicle and a mirror head arranged on the mirror foot as well as a mirror glass accommodated in the mirror head and arranged rigidly and fixed non adjustably with respect thereto. Such an external rear view mirror is described in European Patent No. 2 492 144 B1. At least one articulation is provided between the mirror head and the arrangement of the mirror foot on the motor vehicle. The articulation includes a total of two articulation axes, and the direction vectors of the articulation axes are independent of each other. The two articulation axes are associated, jointly and/or independently of each other for swiveling the mirror head from an operating position to a swung-in position and vice versa. The articulation axes are also for swinging-in the mirror head in and against the direction of motion, adjusting an individual adjusting position of the mirror glass by adjusting the mirror head depending on, e.g., the seating position and the height of a driver of the motor vehicle. The mirror has a first adjusting drive driven by an electric motor and associated to a first articulation axis of the two articulation axes and a second adjusting drive driven by an electric motor and associated to a second articulation axis of the two articulation axes.

JP 2007145041 describes a vehicle periphery visually confirming device which comprises a supporting portion fixed to a side part of the vehicle concerned, and supporting the door mirror so as to be developed/folded; a camera arranged at the supporting portion, and taking an image around the vehicle; and a display device displaying the taken image of the camera.

The device of DE 102 18 821 A1 makes the blind spot to the rear visible to a driver so there is no longer a blind spot by converting an optically visible image into electrical energy, transporting this to a display by glass fiber cable or other conducting path and presenting it as a fully visible image to the driver. The image can be displayed in black and white or in colored form.

EP 3 321 132 A1 (not pre-published) relates to one external rear vision device for a motor vehicle having a fixed base assembly provided for arrangement on the motor vehicle and a moveable head assembly attached to the base assembly via an articulation assembly, said articulation assembly having a fixed part rigidly attached to the fixed base assembly and a moveable part rigidly attached to the head assembly, and said articulation assembly comprising two articulation axes, the direction vectors of said articulation axes being independent of each other. A foot of the base assembly is providing a spherical seat for a casing, in particular a lower casing element, of the head assembly, and frame means are providing at least one spherical seat for the casing, with the frame means being rigidly attached to the fixed part or comprised by the fixed part.

With JP 2004082918 a vehicular noctovision is provided with an infrared projector emitting infrared light, a camera receiving reflected light of the infrared light emitted from the infrared projector and irradiated on the area in front of the vehicle to pick up an image of the area in front of the vehicle, and a displaying means for displaying a result picked up by the camera. The camera is provided on a rearview mirror attaching part in a cabin, the camera can turn in right and left directions, and orientation of the camera is controlled so as to follow an advancing direction of the vehicle.

A door mirror device as described in JP 2013-060172 A includes a camera for imaging the back side of the vehicle, and a reflection mirror unit having a reflection mirror that advances and retreats on an optical axis of the camera. When a vehicle speed is equal to or less than a predetermined value, the reflection mirror advances on the optical axis with an inclination with respect to an optical axis of the camera, to allow the camera to receive an image of the lower side of the vehicle, which is reflected by the reflection mirror. When the vehicle speed exceeds the predetermined value, the reflection mirror is retreated from the optical axis of the camera, to allow the camera to directly receive the image of the back side of the vehicle.

US 2004/0114262 A1 discloses a rearview mirror system which comprises a spotter mirror for providing an image of an object in a vehicle's blind zone to the vehicle's operator. A recognition enhancement device is provided with the spotter mirror for drawing the attention of the driver to the spotter mirror when an overtaking vehicle enters the driver's blind zone. The signaling display is activated by a sensing system which senses the presence of the overtaking vehicle in the blind zone. An electrochromic element is incorporated into the spotter mirror to reduce the intensity of light transmitted from the object and reflected from the spotter mirror. Activation of the electrochromic element to darken the spotter mirror will induce the operator to observe the object in the spotter mirror.

JP 2006103663 teaches a door mirror which is provided with a mirror support fixed near a door window frame of a vehicle and the mirror case pivotally supported by the mirror support freely to turn, and turned between a standing position and a housing position. An image pick-up device such as a CCD camera is provided in one or a plurality surfaces which cannot be visually confirmed from the outside when the mirror case is positioned at the standing position and the mirror case support and the mirror case face to each other, and a surface which is exposed outside when the mirror case is positioned at the housing position.

JP 2008221980 provides a mirror by which a driver confirms the rearview of a vehicle, a mirror cover for protecting the mirror, an arm supporting the mirror cover openably and closably, and an image pickup device attached to the arm for imaging around the side of a vehicle as blind spots for the driver. The image pickup device is disposed on an end portion of the arm which undergoes no field-of-view interference by the side mirror and directly receives no sun light.

JP H09136574 A describes a mirror adapted such that when an operating lever is set at a locking position, slides mounted on a connecting member is put in press contact with supports mounted on a base member in response to the energizing force of an energizing member to constrain the displacement of the connecting member, and a mirror body is integrally connected to the base member via the connecting member and locked to a usage position. The mirror body locked to the usage position is oscillated and around a connecting bolt against the energizing force of a compressed coil spring and displaced to a storage position therebehind. In this way, a mirror can be stably held without reducing comfortability in a room.

The object of the present invention is to provide an improved external rear view device. This object is solved by claim 1. Preferred embodiments of the invention are described in the claims 2 to 8.

According to the invention, an external rear view device for a motor vehicle includes a fixed base assembly provided for arrangement on the motor vehicle, a moveable head assembly attached to the base assembly, an articulation assembly, the articulation assembly including a fixed part attached to the fixed base assembly and a moveable part attached to the head assembly, and a camera unit.

The base assembly may further include a foot providing a spherical seat for a lower casing element of the head assembly, and frame means providing at least one spherical seat for the casing, with the frame means being attached to the fixed part.

A cradle is mounted to a casing, in particular the lower casing element, allowing rotational movement inboard/outboard and up/down,

The articulation assembly may be surrounded by an additional bracket mounted to the fixed frame, or a cradle is mounted to the articulation assembly to support the camera unit.

The external rear view device includes, in addition to the camera unit, a camera connector which is positioned in a non-moving area of the moveable head assembly and receives the camera unit. Thus, the external rear view device further includes a camera connector which is positioned in a non-moving area of the moveable head assembly and receives the camera unit.

The external rear view device may further include a glass element and a lens, where the camera is configured to obtain a rear view image through the glass element and obtain an image underneath the mirror through the lens.

The external rear view device may further include at least one casing element, in particular in form of a lower casing element and an upper casing element, and a removable cassette bezel, wherein the removable cassette bezel comprises a lower mating portion configured to hingedly attach to the articulation assembly or the casing element, in particular the lower casing element, with preferably an upper mating portion being configured to fit into the upper casing element.

The external rear view device may further include an upper cradle and a lower cradle, and the upper cradle and the lower cradle are attached to the moveable part of the articulation assembly.

The external rear view device may further include a fixed case frame, the fixed case frame comprising a hole for receiving a joint attachment between the upper cradle and the lower cradle, wherein the fixed case frame is configured to absorb downward load applied on the external rear view device to protect the articulation assembly.

The fixed case frame may include a shape corresponding to a shape of the articulation assembly so that the fixed case frame wraps around and covers a side of the articulation assembly.

The articulation assembly is be configured to adjust the rear view device between an outboard drive condition, a standard drive condition, a park condition, and positions therebetween.

In another aspect, an external rear view device for a motor vehicle includes a fixed base assembly provided for arrangement on the motor vehicle, a moveable head assembly attached to the base assembly, an articulation assembly, the articulation assembly including a fixed part attached to the fixed base assembly and a moveable part attached to the head assembly, a lower casing element, an upper casing element, and a removable cassette bezel, where the removable cassette bezel comprises a lower mating portion configured to hingedly attach to the lower casing element and an upper mating portion configured to fit into the upper casing element, and where the articulation assembly includes two articulation axes, the direction vectors of the articulation axes being independent of each other.

The external rear view device may further include a camera unit and a camera connector which is positioned in a non-moving area of the fixed base assembly and receives the camera unit.

The external rear view device may further include a glass element and a lens, wherein the camera is configured to obtain a rear view image through the glass element and obtain an image underneath the mirror through the lens.

The external rear view device may further include an upper cradle and a lower cradle, and the upper cradle and the lower cradle are attached to the moveable part of the articulation assembly.

The external rear view device may further include a fixed case frame, the fixed case frame comprising a hole for receiving a joint attachment between the upper cradle and the lower cradle, wherein the fixed case frame is configured to absorb downward load applied on the external rear view device to protect the articulation assembly.

The fixed case frame may include a shape corresponding to a shape of the articulation assembly so that the fixed case frame wraps around and covers a side of the articulation assembly.

In an additional aspect, an external rear view device for a motor vehicle includes a fixed base assembly provided for arrangement on the motor vehicle, a moveable head assembly attached to the base assembly, an articulation assembly, the articulation assembly including a fixed part attached to the fixed base assembly and a moveable part attached to the head assembly, an upper cradle and a lower cradle, the upper cradle and the lower cradle being attached to the moveable part of the articulation assembly, and a fixed case frame including a hole for receiving a joint attachment between the upper cradle and the lower cradle, where the fixed case frame may be configured to absorb downward load applied on the external rear view device to protect the articulation assembly, and where the articulation assembly includes two articulation axes, the direction vectors of the articulation axes being independent of each other.

The articulation assembly may be configured to adjust the rear view device between an outboard drive condition, a standard drive condition, a park condition, and positions therebetween.

In other aspects, it is at least one object of the present invention to further develop the known external rear view device to enhance functionality and efficiency while at the same time reducing size and costs.

This object is solved by a foot of the base assembly providing a spherical seat for a casing, in particular a lower casing element, of the head assembly, and frame means providing at least one spherical seat for the casing, with the frame means being rigidly attached to the fixed part or part of the fixed part.

According to an aspect of the invention, the base assembly may include an attachment part for the attachment to the motor vehicle, with the attachment part carrying a control system for the articulation assembly, the attachment part guiding cables from the interior of the motor vehicles to the interior of the foot, or the attachment part closing the foot at its end opposite its spherical seat.

The base assembly may include a carrier part for the attachment of the fixed part of the articulation assembly or of a fixation part of the frame means, with the carrier part extending from the spherical seat of the base assembly, or the carrier part guiding the cables from inside the foot through a cable exit into the head assembly.

The carrier part may be at least partly arranged within the fixation part, or the carrier part may be attached to the fixation part by a screw or clip connection and/or by a bayonet attachment.

The frame means may include a support part supporting the fixed part of the articulation assembly, preferably by at least partly encompassing the fixed part, with the support part in particular having a ring shape, and/or by a clips or snap connection.

Preferred embodiments of the invention are characterized in that the frame means includes a first spherical seat for the lower casing element and a second spherical seat for an upper casing element of the casing. Preferably, the first and second spherical seats of the frame means are provided by extensions arranged at opposite ends of the fixation part or on the side of the support part facing away from the fixed part of the articulation means.

The first spherical seat may be provided by a first extension facing away from the fixed part of the articulation means and a second extension facing towards the moveable part of the articulation means. Preferably, the support part and the first and second extensions form a part of a ring with a cut-out providing a rim facing towards the moveable part of the articulation means.

It is preferred that the fixation means is provided with a cable exit, with the cable exit of the fixation means being aligned with the cable exit of the carrier part, the cable exit of the fixation means being arranged on the side of the fixation means facing away from the fixed part of the articulation means, or cables exiting the cable exit of the fixation means being connected to at least one camera or at least one light unit at least partly arranged within the head assembly.

The lower casing element may have a first spherical seat cooperating with the spherical seat of the foot and/or a second spherical seat cooperating with the first spherical seat of the frame means, with preferably the first and second spherical seats of the lower casing element being provided by a base part of the lower casing element.

The lower casing element preferably has an attachment part fixed to the moveable part of the articulation assembly. Preferably, the attachment part extends substantially perpendicularly to the base part of the lower casing element. The attachment part and the frame may be arranged on opposite sides of the unit provided by the fixed and the moveable parts of the articulation assembly. Preferably, the attachment part encompasses the moveable part at least partly, or preferably the attachment part and the moveable part are connected via a clip, plug and/or snap connection.

The attachment part may be provided with a part ring for partly encompassing the moveable part of the articulation assembly, with preferably the part ring being provided by a cut-out determined by the part ring provided by the support part and the first and second extensions.

The unit may be an actuator for a reflective element, in particular in form of mirror element, being attached to the attachment part.

The lower casing element may carry the upper casing element or the camera, and a bezel may be attached to the lower and upper casing elements with the bezel preferably surrounding the reflective element.

Furthermore, due to the movable mirror head and to provide a consistent field of view, a camera may be located either within the base assembly or on a fixed component within the mirror head. The location within the base provides a greater impact protection. Being positioned within the head on a fixed component, the camera is directed to view through the glass and/or to view under the mirror through a lens in the lower casing element where it is protected against environmental influences.

Attached to the lower and upper casing elements, the bezel may carry various required legal glass types and provide the final locking system to control the head assembly retention and alignment of the mirror head components. The bezel may house a number of functions or features such as lights, warnings or heating elements.

The articulation assembly may be surrounded by an additional bracket mounted to the fixed case frame and a cradle mounted to the lower casing element allowing rotational movement inboard/outboard and up/down to provide additional support. In particular, rotational downward load may be exerted on the mirror head, with a case frame ring acting as the inboard and outboard stop.

In addition, the articulation assembly may also set the mirror head to a fold park condition, i.e. the folded position of the mirror when the car is parked, utilising the full range of movement. The articulation assembly can be a single 2 axis actuator or a combination of 2 single actuators, positioned independently along the mirror rotation axis, with or without intelligences. A separate memory module may be incorporated as well.

In an aspect, a head assembly of an external rear view device, in particular in the form of a mirror head of an external rear view mirror, can be articulated inboard/outboard and up/down using an articulation means. In particular, the articulation means may be a glass actuator, around a spherical joint, with spherical seats being provided between parts moving relative to each other such that they can rotate around two articulation axes perpendicular to each other having a common joint point. This ensures the maintenance of current end user functionality while offering significant smaller mirror size, with a reduction of size up to 30%. In addition, the unique layout of the internal mechanism with its spherical seats enhances packaging and performances.

The articulation assembly may also be supported and protected for impact using the spherical seats, in particular due to the arrangement of frame means between the articulation assembly and a casing of the head assembly. Because the casing is assembled from several casing elements, one of which is secured to the moveable part of the articulation assembly, this improves the weight distribution and reduces total housing frontal area on the vehicle which in turn improves aero performance and, thus, provides a higher fuel efficiency.

The pivot system used for the rear view device of an aspect of the invention with the single pivot point for two articulation axes permits a mirror adjustment while providing dynamic mirror performance and mirror impact support.

The foregoing summary, as well as the following detailed description, will be better understood when read in conjunction with the appended drawings. For the purpose of illustration, certain examples of the present description are shown in the drawings. It should be understood, however, that the invention is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the invention:
- Figure 1: is a diagram illustrating a perspective view of a base assembly of a rear view device.
- Figure 2A and Figure 2B: are diagrams illustrating two perspective views of the base assembly of figure 1 having frame means attached thereto, as viewed from two different sides.
- Figure 3A and Figure 3B: are diagrams illustrating perspective views like figure 2a with an articulation assembly and an articulation assembly as well as a lower casing element being attached, respectively.
- Figure 4a and Figure 4b: are diagrams illustrating perspective views of the base assembly of figure 1 with the lower casing element and the lower casing element plus the articulation assembly being attached, respectively.
- Figure 5A and Figure 5B: are diagrams illustrating perspective views of the base assembly to which the frame means, the articulation assembly and part of the casing are attached, as viewed from two different sides.
- Figure 6A and Figure 6B: are diagrams illustrating a front view of a camera located within the base assembly and a respective section view along the line 6b-6b illustrated in figure 6A.
- Figure 7: is a diagram illustrating a side cross-sectional view of the head assembly with a camera located on a fixed base frame.
- Figure 8A: is a diagram illustrating a side cross-sectional view of a head assembly depicting the way of attachment of the cassette bezel.
- Figure 8B and Figure 8C: are diagrams illustrating side sections views of the front of a head assembly with two possible attachment types of the cassette bezel.
- Figure 8D: is a diagram illustrating a perspective view of the head assembly with the cassette bezel being attached thereto.
- Figure 9A: is a diagram illustrating a side view of a support mechanism for the articulation assembly inside the head assembly.
- Figure 9B and Figure 9C: are diagram illustrating sections views of figure 9A.
- Figure 10: is a top down section view of the head assembly depicting the various head conditions achieved by a single 2 axis articulation assembly.
- Figure 11A and Figure 11: B are diagrams illustrating a top down section view of the head assembly with a articulation assembly of 2 single actuators and a respective section view.

According to the invention, an external rear view device of the invention, such as a rear view mirror, includes a base assembly 10, a frame means 20, an articulation assembly 30 and a casing 40. These parts will be described in the following with reference to the figures.

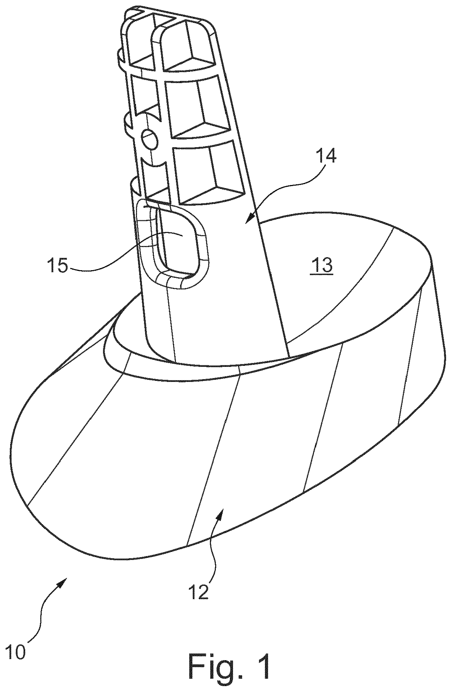

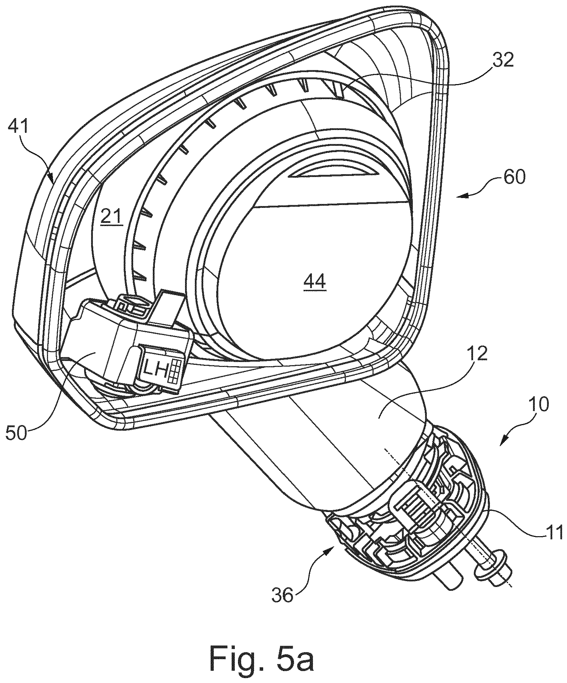

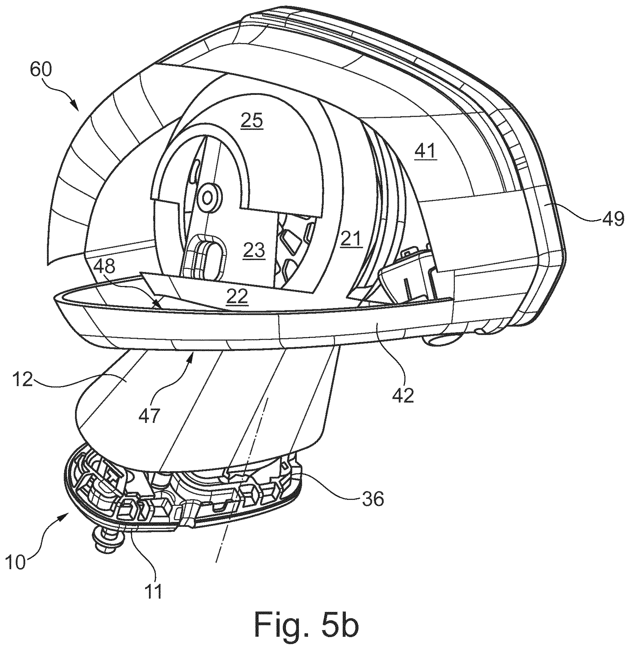

According to figure 1, the base assembly 10 includes a foot 12 provided with a spherical seat 13 from which a shaft type carrier part 14 extends, with the carrier part 14 being provided with a cable exit 15. The foot 12 can be closed at its end opposite the spherical seat 13 by an attachment part 11 discussed with respect to figures 5A and 5B below.

The base assembly 10 is fixedly secured to a motor vehicle (not shown) via the attachment part 11 when in use.

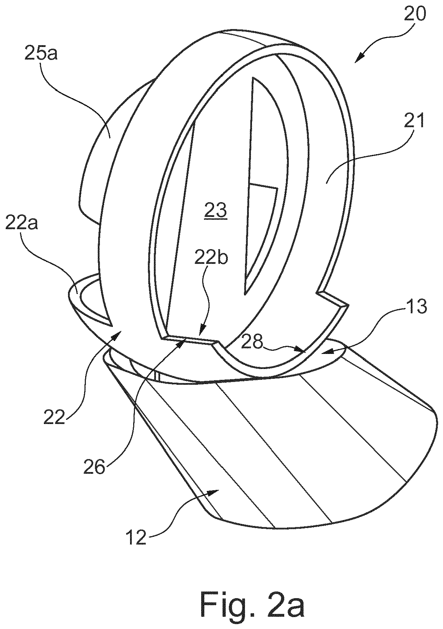

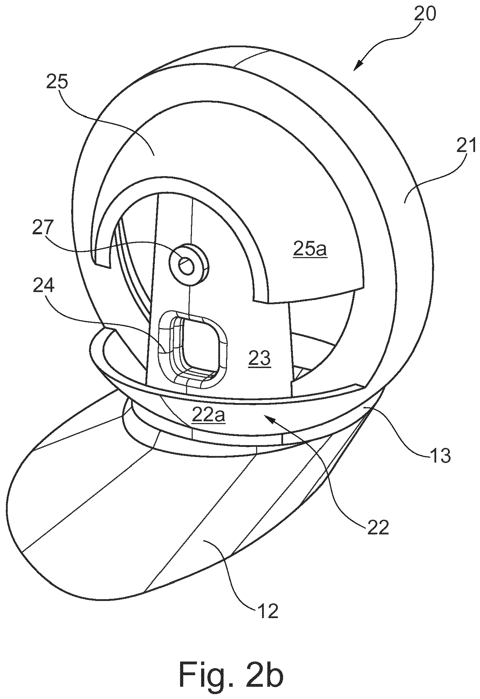

Figures 2A and 2B illustrate the frame means 20 fixedly secured to the base assembly 10. The frame means 20 is provided by a support part 21 more or less with a ring shape, two spherical seats 22 and 25 provided by extensions 22a, 22b and 25a and a fixation part 23 into which the carrier part 14 of the base assembly 10 is inserted such that the lower spherical seat 22 in figures 2a and 2b is facing the spherical seat 13 of the foot 12. The extensions 22a, 22b and 25a extend from opposite sides of the fixation part 23, with two lower extensions 22a, 22b providing a lower spherical seat 22 and the upper spherical seat 25 being provided by an upper extension 25a.

The fixation part 23 is provided with a cable exit 24 in alignment with the cable exit 15 of the carrier part 14. For securing the attachment of the frame means 20 to the base assembly 10 a screw (not shown) can be entered into a screw hole 27 provided by the fixation part 23 and the carrier part 14.

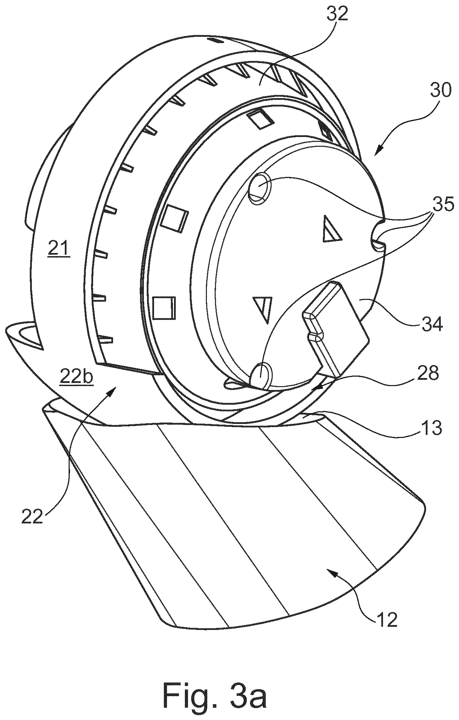

As can be seen in figure 3A the articulation means 30 can be attached to the frame means 20 by partly inserting a fixed part 32 of the articulation assembly 30 into the support part 21. The respective arrangement can be fixed with a clip connection or the like. The fixed part 32 is moveably connected to a moveable part 34 of the articulation assembly 30, with the moveable part 34 facing away from the frame means 20.

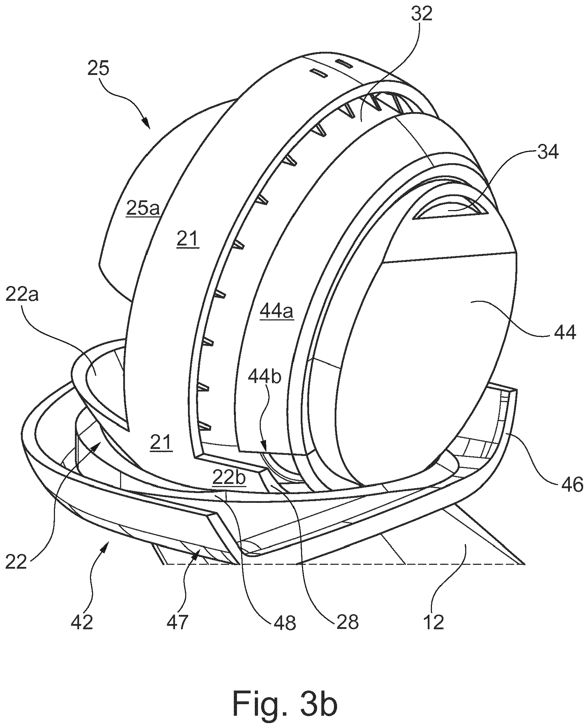

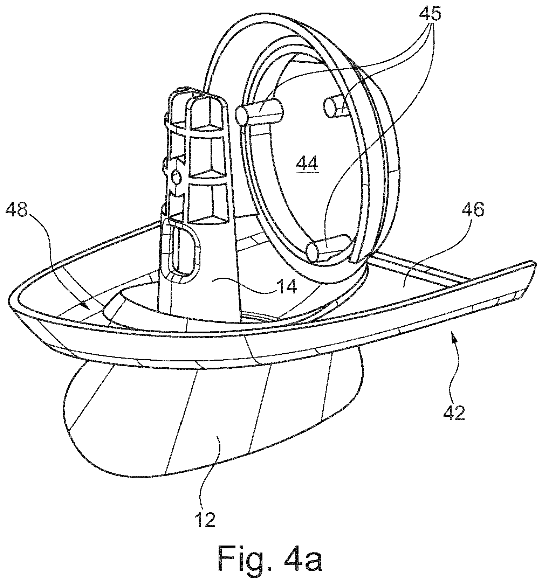

The lower extensions 22a and 22b provide a part ring together with the lower part of support part 21 to provide the spherical seat 22, with a rim 28 being provided by a cut-out at the end facing the moveable part 34 of the articulation assembly 30. The moveable part 34 is provided with attachment means 35 in the form of recesses for the attachment of a casing 40. Figure 3B shows the subassembly of figure 3A with a lower casing element 42 of the casing 40 attached thereto. The lower casing element 42 is provided with an attachment part 44 attached to the moveable part 34 of the articulation assembly 30 in a fixed manner in order to move together with the moveable part 34. For that purpose, the attachment part 44 is formed with attachment bosses 45 shown in figure 4A, with the attachment bosses 45 being insertable into the attachment recesses 35, and with a part ring 44a for partly encompassing the moveable part 34 to add strength to the connection of the lower casing element 42 and the moveable part 34 due to an enhanced power transmission. Further ribs and the like can be added to further increase the strength.

As can be best seen in figure 3B the part ring 21, 22a, 22b and the part ring 44a are complementary to each other to lead to a compromise of the spherical seat 22 enabling a smooth movement of the lower casing element 42 together with the moveable part 34 on the one hand and a strong connection of the lower casing element 42 to the moveable part 34 on the other hand.

In addition, the lower casing element 42 is provided with a base part 46 arranged between the foot 12 and the frame means 20, in particular the lower extension of the frame means. The base part 46 is provided with a lower spherical seat 47 cooperating with the spherical seat 13 of the foot 12 and an upper spherical seat 48 cooperating with the lowest spherical seat 22 of the frame means 20. Accordingly, the overall structure is that of three parts spheres. The inner part sphere is provided by the frame means 20 and the outer part sphere is provided by the foot 12 of the base assembly 10 being fixed. The part sphere provided by the lower casing element 42, and being arranged in the middle, can be moved around two articulation axes in order to provide an inboard/outboard and up/down movement. Attached to the attachment part 44 is a mirror glass (not shown) which can thus be moved via the articulation assembly 30 to fulfil the legal field of view requirements of the rear view mirror.

Figure 4A provides further details of the relative arrangement of the lower casing element 42 with respect to the base assembly 10.

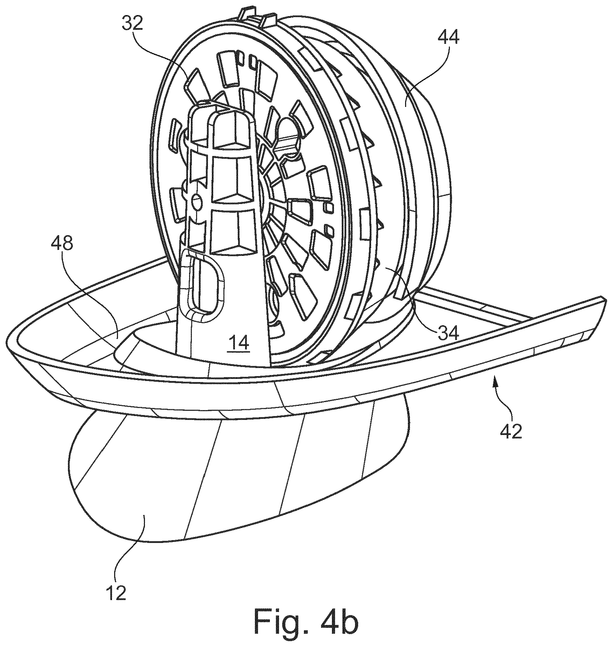

Figure 4B shows the subassembly of figure 4A together with the fixed part 32 and movable part 34 attached between the carrier part 14 of the base assembly 10 and the attachment part 44 of the lower casing 42. The articulation assembly 30 also includes drive means (not shown), in particular including two motors for the movement of the moveable part 34 about the two articulation axes, and a control system 36 for the drive means which is partly shown in figures 5A and 5B.

The perspective view of figure 5A not only shows the subassembly provided by the base assembly 10, the articulation assembly 30 and the lower casing element 42, but also shows an upper casing element 41 of the casing 40 and a camera 50 both being attached to the lower casing element 42. Figure 5B shows the subassembly of figure 5A from an opposite side, without the casing 40 closed via an additional casing element (not shown) to complete a head assembly 60. Figure 5b shows. in addition to the upper casing element 41 and the lower casing element 42 a bezel 49 attached to the upper and lower casing elements 41, 42. The bezel 49 surrounds the mirror glass (not shown) of the completely assembled external rear view mirror.

Still further, the control system 36 of the articulation assembly 30 is carried by the attachment part 11. When the attachment part 11 is secured to the foot 12, the control system 36 is completely arranged within the foot 12. Also arranged within the foot 12 are cables which exit the base assembly 10 at the cable exit 15 and reach the interior of the head assembly 60 by passing also through to the cable exit 24 of the frame means 20 in order to be connected to the camera 50 and other units like lighting units and the like (not shown), which are arranged within the head assembly 60.

The head assembly 60, or rather the mirror head as a whole, can be articulated using the articulation assembly 30 in particular via the movable part 34. The movable part 34 is connected to the drive system which can be a part of the control system 36. The control system 36 can also comprise memory means for memorizing a position of the movable part 34 and, thus, the mirror glass attached thereto via the attachment part 44.

The support part 21 may be an actuator ring which is clipped onto the fixed part 32 to provide improved support in an impact situation. Due to its upper spherical seat 25, the frame assembly 20 ensures a smooth movement of the upper casing element 41 which is also provided with an internal spherical seat (not shown).

The arrangement of the support part 21 with its extensions 22a, 22b, and 25a , forming spherical seats 22, 25, relative to the movable upper and lower casing elements 41, 42, provide a support and stiffness in all three directions during dynamic and impact situations. The result is a smaller mirror system offering the customer a unique external rear view mirror weight as well as aero and vehicle fuel efficiency benefit.

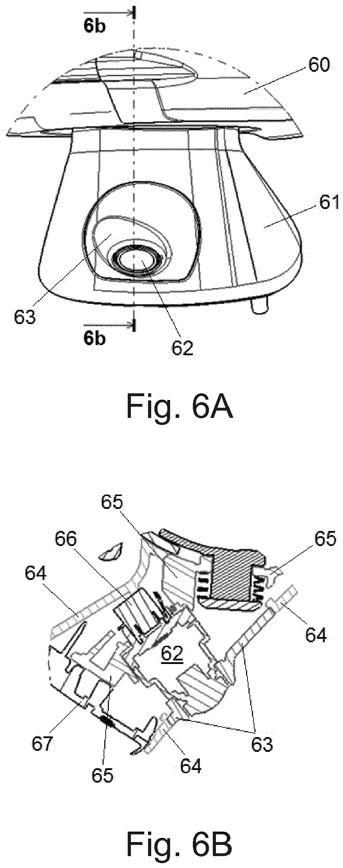

Referring to figures 6A and 6B, due to the movement of the head assembly 60, a non-moving area for securing a camera 62 may be used. In this example, the camera 62 is positioned in a solid, non-moving area which does not move when the head actuates. Figures 6A and 6B show the camera 62 located in the mirror base assembly 61 fixed on the base frame 65 with a camera connector 66. The camera 62 is covered by a base cap 63 and the base assembly is covered by a base cover 64 and secured via a gasket 67 to a motor vehicle (not shown). Figure 6B illustrates a section view along the line 6b-6b of figure 6A. In this example, the camera 62 is fixed in the mirror base assembly 61 of the rear view means.

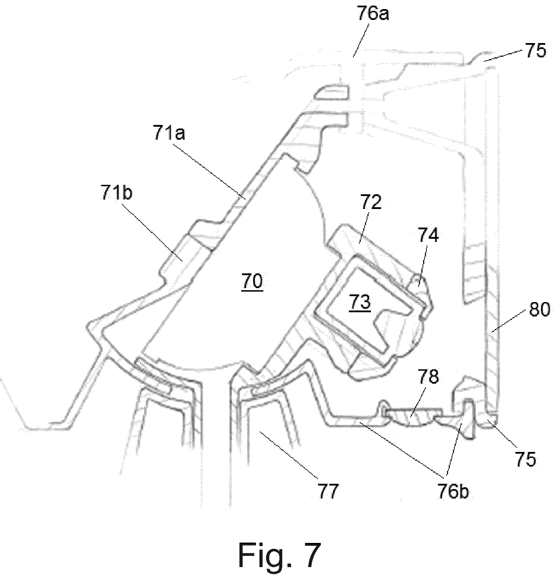

According to the invention, the camera is fixed to the head assembly 60. As shown in figure 7, the camera 73 is mounted on the base frame 72 that is connected to the base assembly 77. Attached to the base frame 72, as well, is the articulation assembly 70 that moves the mirror head connected via the upper cradle 71a and lower cradle 71b. The upper casing element 76a is connected to the upper cradle 71a, and the lower casing element 76b is connected to the lower cradle 71b. The head assembly is finally locked through a bezel 75 that carries the mirror glass 80.

The camera 73 is fixed by a camera cradle 74 and is directed to view through an opening in the bezel 75 through the glass 80 and/ or to view under the mirror through a lens 78, which is installed in the lower casing element 76b. As in the configuration of figures 6A and 6B, the camera of figures 7A and 7B is secured to a solid, non-moving area that does not move when the head actuates. The camera 73 is packaged into the case frame of the head assembly 60. This provides the camera 73 with a number of different fields of view; in particular, producing at least images of the rear of the vehicle, the side of the vehicle, the front of the vehicle, or the underneath the mirror or the vehicle. In the illustrated example, the camera 73 is directed to view behind the vehicle through the glass 80 and underneath the mirror through the lens 78.

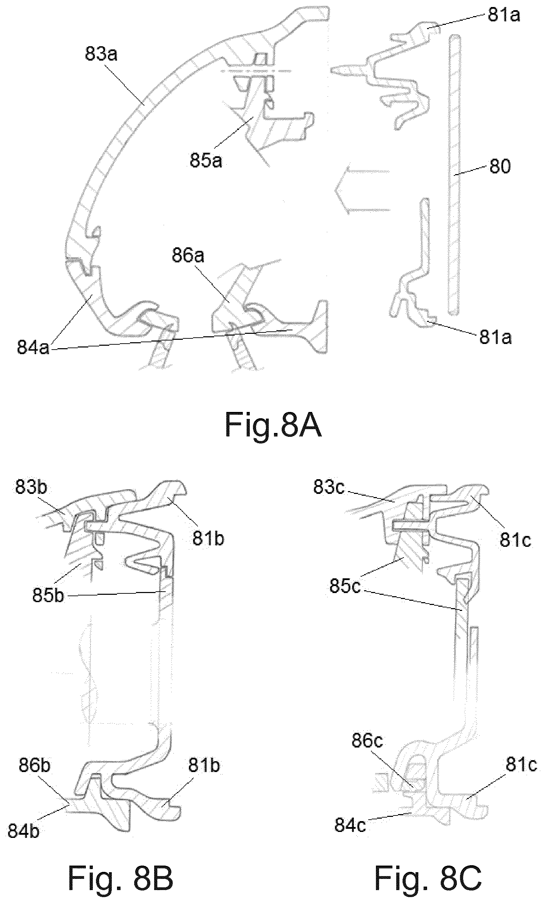

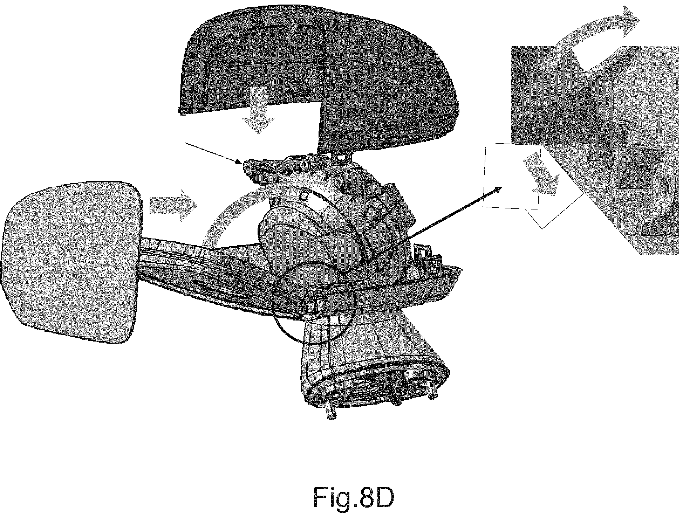

Referring to figures 8A, 8B, 8C, and 8D a cassette bezel 81a, 81b, and 81c may be used in combination with the head assembly 60 described throughout this application. The head unit may be supplied without the glass, bezel, or scalp being attached, thus allowing for late configuration and adjustability by the customer. There are a number of different ways that the cassette bezel 81a, 81b, 81c may be attached, as illustrated in figures 8A, 8B, and 8C. Different glass 80 types may be attached to the head assembly in a removable way and provide the final locking system to control the head assembly retention and alignment of the mirror head. Different substitutable glass types include, but are not limited to, standard glass or EC glass. Different substitutable bezel types include, but are not limited to, standard bezels or bezels including lighting elements and functionalities.

The cassette bezels 81a, 81b, 81c are single, unitary parts and they are first latched over the lower casing elements 84a, 84b, 84c and/or respectively partly in combination with the lower cradles 86a, 86b, 86c. Once latched to the lower casing elements 84a, 84b, 84c, the cassette bezels 81a, 81b, 81c are then rotatable about the lower casing elements 84a, 84b, 84c almost as if hingedly attached. The cassette bezels 81a, 81b, 81c then tilt into the upper cradles 85a, 85b, 85c, to also lock to the upper casing elements 83a, 83b, 83c. Figure 8D best illustrates the cassette bezels 81a, 81b, 81c as attached to the lower casing elements 84a, 84b, 84c and before being tilted to attach to the upper casing elements 83a, 83b, 83c.

Referring back to figures 8A, 8B, and 8C, the linking portion of the bezels 81a, 81b, 81c which attaches to the lower casing elements 84a, 84b, 84c may have at least three different configurations including tapered square male-female attachment, as in figure 8A, tapered square male-female attachment with an extended support area, as in figure 8B, and a curved attachment with an extended support area, as in figure 8C. Also, the linking portion of the bezels 81a, 81b, 81c which attaches to the upper casing elements 83a, 83b, 83c may have at least three different configurations such as a tapered projection extending through the upper cradle 85a, as in figure 8A, a rectangular projection extending only partly into the upper cradle 85b, as in figure 8b, or a rectangular projection extending through the upper cradle 85c.

A number of other configurations can also be used and the invention is not limited to these configurations.

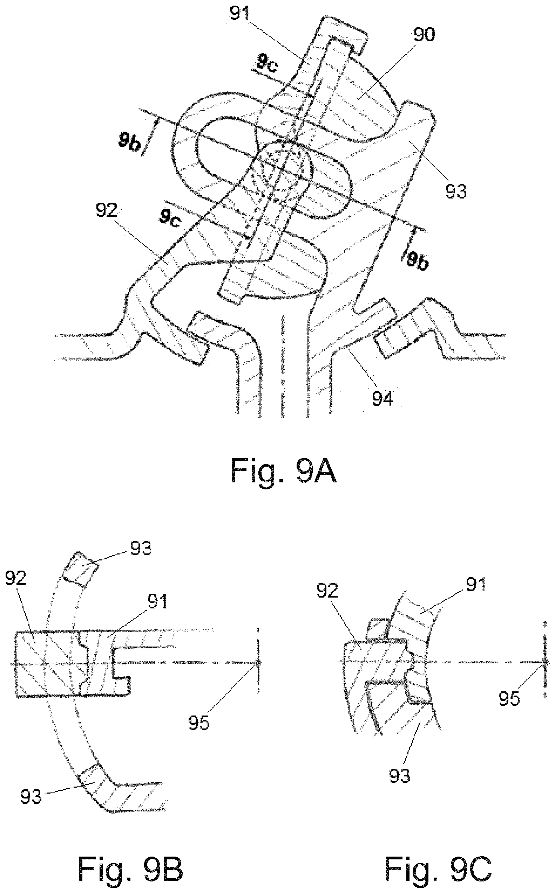

Figures 9A, 9B, and 9C are diagrams illustrating a support mechanism for the articulation assembly inside the head assembly. As the articulation assembly 90 is the mechanical fixing point between the moving mirror head and the fixed base, it needs protection from downward load exerted on the mirror head. It should be noted that the configuration of the articulation assembly 90 in this example is opposite to the example illustrated in figures 1-5B. That is, the moving part of the articulation assembly 90 of this example is the spherical portion having the larger diameter shown on the left hand side of the drawing, and the non-moving part of the articulation assembly 90 is the fixed part with the smaller diameter shown on the right hand side of the drawing. As can be seen in figures 9A, 9B, and 9C, additional support is provided by a bracket mounted on the fixed base frame 93 hugging the articulation assembly 90 with two elongated hole rings, one on each opposite side of the articulation assembly 90. Through the holes an upper cradle 91 mounted on the articulation assembly 90 and a lower cradle 92 mounted on the mirror head are joined to each other allowing rotational movement inboard/outboard and up/down. The elongated hole case frame rings create the locking mechanism and provide the inboard and outboard stops.

Figure 9B is a cross-sectional view showing the attachment of the upper cradle 91 to the lower cradle 92 and the hole of the base frame 93 along the line 9b-9b of figure 9A. As shown in figure 9B, the upper cradle 91 and lower cradle 92 are fixedly attached and move together to one end or the other end of the hole of the base frame 93 as the mirror is actuated to move inboard or outboard. Referring to figure 9C, a cross-sectional view showing the attachment of the upper cradle 91 to the lower cradle 92 along the line 9c-9c of figure 9A is illustrated. As the mirror is actuated to move up or down, the upper cradle 91 and lower cradle 92 move together within the hole of the fixed base frame 93. The base frame 93 is thus a fixed surface which acts to cover the articulation assembly 90 and encompass the articulation assembly 90 to support downward or other types of load.

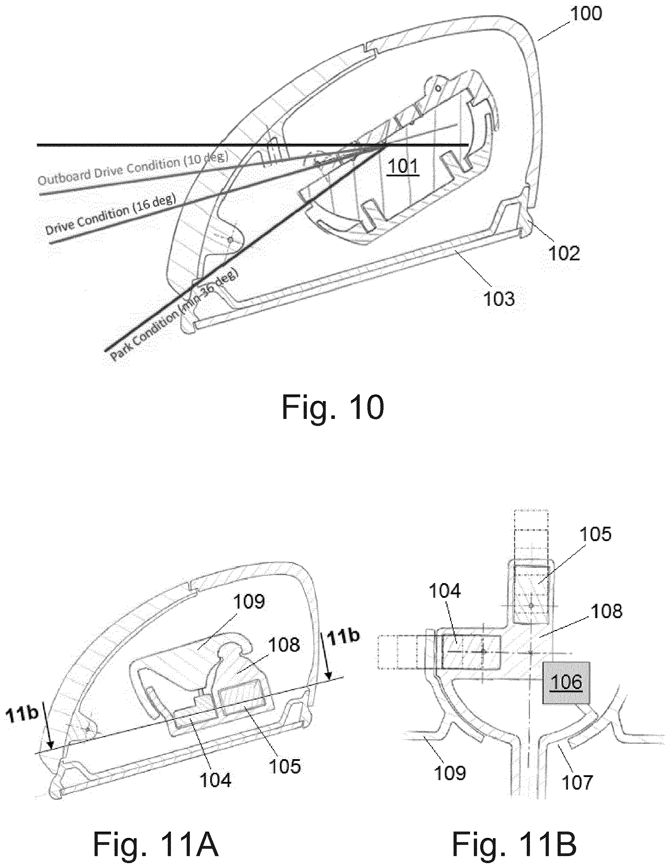

Figure 10 is a diagram illustrating a top down section view of the head assembly depicting the various head conditions achieved by a single 2 axis articulation assembly. A park fold position of the mirror head assembly 100 can be provided using the same articulation assembly 101 that is used to set the mirror in drive condition with a single 2 axis glass actuator orientated to utilize the full angular working range, as illustrated in figure 10.

In another example, figures 11A and 11B show an assembly with 2 single axis actuators 104 and 105 positioned independently of each other, along the mirror head rotational axis, controlled by integrated memory circuits or a separate memory module 106. Referring to figure 11B, a cross-sectional view along the line 11b-11b of figure 11A is shown with the two independent single axis actuators 104, 105 also illustrated. The two independent actuators allow the mirror to be adjusted inboard/outboard and up/down according to the desire of the driver. As with the articulation assembly described throughout this application, the two independent single axis actuators 104, 105 are also configured to allow adjustment of the mirror between an outboard drive condition, a standard drive condition, a park condition, and conditions therebetween.

Different functions and devices can be incorporated into and/or controlled with the help of rearview devices including especially also cameras.

Especially useful are functions and devices to enhance, extend and/or sustain the functionality of the rearview device during normal or extreme conditions. This may include heating and/or cooling means, cleaning means such as wipers, liquid and/or gaseous sprays, actuator means for moving the rearview device or parts of it, such as for example a display, a camera system and/or parts of a camera system, including for example lenses, filters, light sources, adaptive optics like deformable mirrors, sensors and/or mirrors, and/or actuator means for inducing movement of other objects, for example parts of the vehicle and/or objects surrounding the vehicle. Furthermore it can include linear tracks and/or rotating wheels, like for example a filter wheel, for exchanging optical elements, including for example lenses, mirrors, light sources, sensors, adaptive optics like deformable mirrors and/or filters.

Prominent examples for functions and devices incorporated into and/or controlled with the help of rearview devices include also illumination devices, for example any kind of light module like an external light module, an internal light module, a front light, a back light, a fog light, a brake light, an acceleration light, a turn signal, a logo lamp, a puddle light, a flash light, a navigation light, a position light, an emergency light, a spotlight, a green light, a red light, a warning light, a turn signal light module, an approach light, a search light, an information light, a display and/or any combination thereof.

Further examples for functions and devices incorporated into and/or controlled with the help of rearview devices may include for example a tiredness detection system, a microsleep detection system, a distance and/or velocity determination system, for example a LIDAR (Light detection and ranging) system, a blind spot indicator system, a lane change assistant system, a navigation assistant system, a tracking assistant system, a human-machine interaction system, a machine-machine interaction system, an emergency and precaution assistant system, like an accident avoiding assistant system, a counter-measures assistant system, a brake assistant system, a steering assistant system, an acceleration assistant system, an escape assistant system, including for example an ejection seat system, a direction indicator, a blind spot indicator, an approach system, a strong braking system, an emergency braking system, a charging status indicator, a vehicle mode system, including for example a sports mode system, an economy mode system, an autonomous drive mode system, a sleep mode system and an anti-theft system, a vehicle locked indicator system, a vehicle stolen indicator, a warning signal system, a temperature indicator system, a weather indicator system, a traffic light signal system, a fuel status system and/or any combination thereof. An example for a rearview device including an illumination device fulfilling the brake light functions is disclosed in German patent application No. 102012108488, filed on September 11, 2012 for REARVIEW ASSEMBLY FOR MOTOR VEHICLE. A light guidance unit for an illumination device used in a back vision system is disclosed in German patent application No. 102012104529, filed on May 25, 2012 for LIGHT GUIDANCE UNIT. An illumination device for a rearview device is disclosed in German patent application No. 102012107833, filed on August 24, 2012 for ILLUMINATION DEVICE AND REARVIEW DEVICE. A lighting device for a back-vision unit is disclosed in German patent application No. 102012107834, filed on August 24, 2012 for LIGHTING DEVICE AND BACK-VISION UNIT. A housing and display device of a rearview device is disclosed in European patent No. 2738043, filed on December 3, 2012 for HOUSING AND DISPLAY DEVICE. An optical light guide for a vehicle lighting unit is disclosed in European patent No. 2947378, filed on May 22, 2014 for OPTICAL LIGHT GUIDE FOR A VEHICLE LIGHTING UNIT. A display device of a rearview device of a vehicle is disclosed in International patent application No. 2015/173695, filed on May 7, 2015 for DISPLAY DEVICE, REAR VIEW DEVICE AND MOTOR VEHICLE and claiming priority to European patent application No. 2944866, filed on May 12, 2014 for OPTICAL UNIT, DISPLAY DEVICE, REAR VIEW DEVICE AND MOTOR VEHICLE INCLUDING THE SAME. Further a light guiding device for an illumination device, in particular for a motor vehicle or a display device, in a rearview device of a motor vehicle is disclosed in European patent application No. 3045944, filed on January 19, 2015 for LIGHT GUIDING DEVICE. Still further a light guiding device for an illumination device, especially for a motor vehicle or an indicator device in a rearview device of a motor vehicle is disclosed in U.S. patent application No. 15/228,566, filed on August 4, 2016, for LIGHT GUIDING DEVICE and is a continuation-in-part of U.S. patent application No. 15/000,733, filed on January 19, 2016 for LIGHT GUIDING DEVICE. In addition, an illumination device, particularly for a rear-view device of a motor vehicle and a method for producing the same are disclosed in International patent application No. 2016/147154, filed on March 18, 2016 for ILLUMINATION DEVICE AND METHOD FOR PRODUCING AN ILLUMINATION DEVICE and claiming priority to German patent application No. 102015104163, filed on March 19, 2015 for ILLUMINATION DEVICE AND METHOD FOR PRODUCING AN ILLUMINATION DEVICE. An improved rear-view device for a motor vehicle which includes an electronic device is disclosed in U.S. patent application No. 15/256,532, filed on September 3, 2016 for ELECTRONIC DEVICE AND REAR-VIEW DEVICE and claiming priority to European patent application No. 3139711, filed on September 3, 2015 for ELECTRONIC DEVICE AND REAR VIEW DEVICE.

A lighting device for a rearview device or a footwell device of a vehicle, including at least one luminous means is disclosed in German patent application No. 102015115555, filed on September 9, 2015 for ILLUMINATION DEVICE, REAR VIEW DEVICE, FOOTWELL DEVICE AND VEHICLE.

A light module for a light assembly of an exterior rear view device is disclosed in European patent application No. 3138734, filed on September 3, 2015 for LIGHT MODULE, LIGHT ASSEMBLY AND REAR VIEW DEVICE FOR A VEHICLE. A lighting device for a vehicle component, in particular for a rearview device of a motor vehicle, including a logo lamp and a deflection mirror are disclosed in European patent application No. 3144183, filed on September 13, 2016 for LIGHTING DEVICE, VEHICLE COMPONENT AND VEHICLE and claiming priority to German utility patent application No. 202015104894, filed on September 15, 2015 for LIGHTING DEVICE, VEHICLE COMPONENT AND VEHICLE.

A camera module can include in particular a plurality of different optical elements, including a.o. a variety of sensors and light sources, as well as housing parts.

The housing of a camera module can be made out of plastic, metal, glass, any other suitable material and/or any combinations thereof and can be used in combination with the techniques described below to change or modify the properties of the material or the material surface. Housings are for example described in German patent application No. 102016108247.3, filed on May 3, 2016 for CLEANING SYSTEM FOR A CAMERA and U.S. patent application No. 15/281,780, filed September 30, 2016 for TELESCOPING REARVIEW ASSEMBLY WITH CAMERA AND LENS WIPING SYSTEM.

The camera can include for example CCD or CMOS or light field sensors, as for example described in German patent application No. 102011053999, filed September 28, 2011 for DETECTION SYSTEM FOR OPTICAL DETECTION OF OBJECT AND/OR REGION OF SPACE FOR DRIVER ASSISTANCE AND/OR DISPLAY SYSTEMS OF MOTOR VEHICLE, HAS OPTICAL SENSOR ARRANGED AS LIGHT FIELD SENSOR FOR DETECTION and U.S. patent application No. 09/771,140, filed on January 26, 2001 for MONITORING DEVICE FOR VEHICLES, IN PARTICULAR, MOTOR VEHICLES, now U.S. patent No. 6,703,925. Also an area of the sensor can be reserved for different purposes, for example to detect a test beam, as described in U.S. patent No. 8,031,224, filed on September 9, 2014 for CAMERA SYSTEM, METHOD FOR OPERATION OF A CAMERA SYSTEM AND SENSOR DEVICE OF A CAMERA SYSTEM.

The optical elements can be molded or formed from any type of glass or any other suitable material. Glass is here used in the meaning of a non-crystalline amorphous solid showing a glass transition when heated towards the liquid state. It includes for example the group of polymeric glasses, metallic glasses, silica glasses, but any other suitable material showing the glass transition can also be used. The glass can be either in a flat, wedge, rectangular, cylindrical, spherical, conical, elliptical, and/or circular shape, as described for example in German patent application No. 102016108247.3, and German patent application No. 102011103200, filed on May 31, 2011 for LIGHT WINDOW FOR USE AS LIGHT CONDUCTOR FOR TURN INDICATOR IN OUTSIDE MIRROR ARRANGEMENT OF VEHICLE, HAS UNCOUPLING STRUCTURES AT CERTAIN LOCATION OF WINDOW, AND OPTICAL FILM WITH MOLDED COATING AND PROVIDED WITH UNCOUPLING STRUCTURES, or have a shape according to different needs or lens types. As non-limiting examples camera modules can be equipped with lenses, like a wide-angle or fish-eye lens suitable to provide peripheral images, as described in U.S. patent application No. 15/281,780, and U.S. patent application No. 13/090,127, filed on April 19, 2011 for REAR VIEW MIRROR SIMULATION, now U.S. patent No. 9,238,434, a Fresnel lens or micro lenses as described in German patent application No. 102011053999, filed September 28, 2011 for DETECTION SYSTEM FOR OPTICAL DETECTION OF OBJECT AND/OR REGION OF SPACE FOR DRIVER ASSISTANCE AND/OR DISPLAY SYSTEMS OF MOTOR VEHICLE, HAS OPTICAL SENSOR ARRANGED AS LIGHT FIELD SENSOR FOR DETECTION, and a TIR (total internal reflection) lens as described in U.S. patent No. 8,740,427, filed September 8, 2010 for OPTIMAL LIGHT COUPLING FOR REAR VIEW DEVICES. Another type of optical elements know to be used in camera modules are optical fibers, especially in form of fiber bundles and preferably in form of fiber bundles having an optical head, as described for example in U.S. patent application No. 09/771,140. Different methods can be used to produce such optical elements, for example as described in U.S. patent 8,460,060, filed on January 30, 2009 for METHOD FOR CREATING A COMPLEX SURFACE ON A SUBSTRATE OF GLASS.

The optical elements can be transparent as described for example in U.S. patent No. 8,031,224, German patent application No. 102016108247.3, and U.S. patent application No. 13/242,829, filed September 23, 2011 for CAMERA ARRANGEMENT AND DOOR HANDLE FOR MOTOR VEHICLE. But the optical elements can also be semitransparent, as described in U.S. patent application No. 09/771,140 and U.S. patent application No. 13/090,127. Still further, the optical elements can be completely or partially coated with different type of coatings to realize different effects, such as for example anti-reflective coatings as described in U.S. patent No. 8,031,224, chromium-based reflective coatings as described in U.S. patent No. 9,181,616, filed on January 24, 2012 for CHROMIUM-BASED REFLECTIVE COATING, and other coatings, for example for polymeric substrates as described in U.S. patent application No. 14/936,024, filed on Nov. 9, 2015 for COATED POLYMERIC SUBSTRATES and in U.S. patent application No. 15/124,310, filed on Feb. 20, 2015 for DECORATIVE COATINGS FOR PLASTIC SUBSTRATES. Preferably the optical elements are made of a scratch-proof material as described for example in German patent application No. 102016108247.3. The optical elements can have uncoupling structures at certain locations of the optical elements, and an optical film, for example an extrusion film, and a molded coating can be applied as described in German patent application No. 102011103200. A coating to spectrally and stress control is described in U.S. patent application No. 15/124,310. Different filters can be integrated into the optical elements such as for example gray filters or polarization filters, described in U.S. patent application No. 14/809,509, filed July 27, 2015 for APPARATUS FOR LIGHT INTENSITY ADJUSTMENT. Electrochromic substrates, polymer electrolytes and other charge conducting medias may be used for the optical elements based on the descriptions of European patent application No. 08103179.1, filed on March 31, 2008 for PROCESS FOR PRODUCING ELECTROCHROMIC SUBSTRATES AND ELECTROCHROMIC ARTICLES MADE THEREFROM, European patent No. 2202826, filed on December 23, 2008 for POLYMER ELECTROLYTES AND DEVICES CONTAINING, U.S. patent No. 7,999,992, filed on January 7, 2005 for CHARGE CONDUCTING MEDIUM_and U.S. patent No. 8,537,451, filed on March 26, 2008 for PROCESSES FOR PRODUCING ELECTROCHROMIC SUBSTRATES AND ELECTROCHROMIC ARTICLES MADE THEREFROM.

The camera module can also be equipped with apparatuses for light intensity adjustment as described for example in U.S. patent application No. 14/809,509 and light level intensifier tubes as described in U.S. patent application No. 09/771,140. The electrochromic substrates and devices used in European patent application No. 08103179.1, European patent No. 2202826, U.S. patent No. 7,999,992 and U.S. patent No. 8,537,451, can also be used for this purpose as well as a transflector to transmit or reflect light based on a corresponding input signal, as described in German patent application No. 102016106126.3, filed on April 4, 2016 for IMAGING SYSTEM.

The camera module or a cover adapted to the camera module can be moved using different actuators, drives and/or a flexible track, as for example described in German application No. 102016108247.3 and U.S. patent application No. 15/281,780.

Still further, the camera module can also include cleaning elements to clean the optical element facing outwards and being exposed to the environment. The cleaning element can for example include wipers, brushes, lips, nozzles, fans and similar elements as are described in European patent application No. 14165197.6, filed April 17, 2014 for OPTICAL SYSTEM FOR A VEHICLE, CLEANING DEVICE AND VEHICLE COMPRISING AN OPTICAL SYSTEM, U.S. patent application No. 15/281,780, German patent application No. 102016108247.3, European patent application No. 13163677.1, filed April 15, 2013 for LENS WIPER, European patent application No. 15173201.3, filed June 22, 2015 for LENS CLEANING WITH FLEXIBLE ACTUATOR and European patent No. 1673260, filed on October 14, 2003 for CLEANING DEVICE. The cleaning devices are not limited in composition, and may for example include any fabric, elastomeric, sponge, brush, or combination of these. Special wiper elements including wiper arms, wiper blades, wiping cloth, wiping tissue and combinations thereof are described in European patent application No. 14165197.6 ,which is hereby incorporated herein by reference. A wiper element may for example be controlled according to the method described in European patent application No. 130164250.6 , filed April 18, 2013 for METHOD FOR CONTROLLING A WIPER DEVICE. A reservoir for holding a cleaning liquid as described in European patent application No. 14165197.6. Such a reservoir can be attached to or integrated into the camera module to provide the cleaning liquid to the optical elements of the camera module.

Different methods may be used to detect dirt or other obscurations preventing or reducing the functioning of the camera module, such as described in U.S. patent No. 8,395,514, filed on June 24, 2008 for OPTICAL SYSTEM AND METHOD FOR DETECTING OPTICAL SYSTEM OBSCURATION IN A VEHICLE, European patent No. 1328141, filed on January 12, for ASSEMBLY HAVING A CONDUCTOR FROM FLEXIBLE MATERIAL AND METHOD FOR MANUFACTURING SUCH AN ASSEMBLY, and U.S. patent No. 8,031,224.

Also light sources can be installed or integrated into the camera module to increase the visibility of surrounding objects, measure distances and directions and detect dirt, such as described in U.S. patent No. 8,031,224, U.S. patent application No. 62/470,658, filed on March 13, 2017, 2016 for LIGHT EMITTING MIRROR BEZEL and U.S. patent application No. 09/771,140.

Different heating means, like heating coils, heating devices integrated into the lens holder or the bezel, or other heating elements can be used to impede condensation and icing at the surface of optical elements, as for example described in German patent application No. 102016108247.3, U.S. patent application No. 62/470,658, and German patent application No 102016107545.0, filed on April 22, 2016 for HEATING DEVICE FOR A CAMERA LENS.

A watertight seal against weather effects, as well as against the influence of washing processes with detergents, solvents and high pressure cleaners can be used on the housing of the camera module as described in U.S. patent application No. 13/090,127.

In another example, the housing can be made of a body including plastic and conductive material, wherein the conductive material is dispersed in the plastic material to form a conductive mass to allow a power source, preferably a DC voltage source, to connect via at least two electrodes to the body and heat the body accordingly, as described in German patent application No. 102016107545.0.

A conductor track can be embedded within plastic parts of the camera module as described in European patent No. 1328141 and U.S. patent No. 7,083,311, filed on January 12, 2002 for CONDUCTOR OF FLEXIBLE MATERIAL, COMPONENT COMPRISING SUCH FLEXIBLE CONDUCTOR, AND METHOD OF MANUFACTURING SUCH CONDUCTOR.

The camera module can include a power harvesting system as described for example in European patent application No. 09171683.7, filed on Sept. 29, 2009 for SELF SUSTAINING REAR VIEW MIRROR.

A fault detection system for electric consumers as described in U.S. patent No. 8,487,633 filed on January 14, 2010 for FAULT DETECTION OF ELECTRIC CONSUMERS IN MOTOR VEHICLES can be used to detect failure of the camera module.

Different types of fixings can be used to fix the camera module to the vehicle or other components, such as for example the snap-fit connection described in European patent No. 2233360, filed on March 27, 2009 for SNAP FIT CONNECTION IN A REAR VIEW MIRROR.

Different control means and analyzing devices can be used, such as the computation units described in U.S. patent application No. 13/090,127, German patent application No. 102016106126.3, German patent application No. 102011053999, European patent No. 2146325, filed on July 16, for Recording Device for Receiving, Processing and Storing Image Files in a Vehicle and Method, and U.S. patent No. 8,849,104, filed on July 16, 2008 for RECORDING DEVICE AND METHOD FOR CAPTURING AND PROCESSING IMAGE DATA IN A VEHICLE. In addition, HDR (high dynamical range) technology can be used according to U.S. patent application No. 14/830,406, filed on Aug. 19, 2015 for REAR VIEW DEVICE FOR A MOTOR and published as US 20150358590.

### Reference Signs

- 10: base assembly
- 11: attachment part
- 12: foot
- 13: spherical seat
- 14: carrier part
- 15: cable exist
- 20: frame means
- 21: support part
- 22: spherical seat
- 22a: extension
- 22b: extension
- 23: fixation part
- 24: cable exit
- 25: spherical seat
- 25a: extension
- 26: shoulder
- 27: screw hole
- 28: rim
- 30: articulation assembly
- 32: fixed part
- 34: moveable part
- 35: attachment means
- 36: control system
- 40: casing
- 41: upper casing element
- 42: lower casing element
- 44: attachment part
- 44a: part ring
- 44b: cut-out
- 45: attachment boss
- 46: base part
- 47: spherical seat
- 48: spherical seat
- 49: bezel
- 50: camera
- 60: head assembly
- 61: base assembly
- 62: camera
- 63: base cap
- 64: base cover
- 65: base frame
- 66: camera connector
- 67: gasket
- 70: articulation assembly
- 71a: upper cradle
- 71b: lower cradle
- 72: base frame
- 73: camera
- 74: camera cradle
- 75: bezel
- 76a: upper casing element
- 76b: lower casing element
- 77: base assembly
- 78: lens
- 80: glass
- 81a: cassette bezel
- 81b: cassette bezel
- 81c: cassette bezel
- 83a: upper casing element
- 83b: upper casing element
- 83c: upper casing element
- 84a: lower casing element
- 84b: lower casing element
- 84a: lower casing element
- 85a: upper cradle
- 85b: upper cradle
- 85c: upper cradle
- 85c: upper cradle
- 86a: lower cradle
- 86b: lower cradle
- 86c: lower cradle
- 90: articulation assembly
- 91: upper cradle
- 92: lower cradle
- 93: base frame
- 94: pivot ball joint
- 95: centre of rotation
- 100: head assembly
- 101: articulation assembly
- 102: bezel
- 103: glass
- 104: actuator
- 105: actuator
- 106: memory module
- 107: pivot ball joint
- 108: case frame
- 109: lower casing element

## Claims

1. An external rear view device for a motor vehicle, comprising:
a fixed base assembly (10, 61, 77) provided for arrangement on the motor vehicle;
a moveable head assembly (60, 100) attached to the base assembly (10, 61, 77);
an articulation assembly (30, 70, 90, 101), the articulation assembly comprising a fixed part (32) attached to the fixed base assembly (10, 61, 77) and a moveable part (34) attached to the head assembly (60, 100); and
a camera unit with a camera (73) being immovably secured within the moveable head assembly (60, 100) via a camera connector (72, 74) which is positioned in a non-moving area of the moveable head assembly (60, 100) that does not move when the moveable head assembly (60, 100) is moved and that receives the camera (73),
wherein the articulation assembly (30, 70, 90, 101) comprises two articulation axes, the direction vectors of the articulation axes being independent of each other, and the articulation assembly (30, 70, 90, 101) is configured to adjust the rear view device between an outboard drive condition, a standard drive condition, a park condition, and positions therebetween, with a cradle (86a, 86b, 86c, 92) being mounted to a casing, in particular the lower casing element (84a, 84b, 84c), allowing rotational movement inboard/outboard and up/down.

2. The external rear view device of claim 1, wherein
the base assembly (10) further comprises a foot (12) providing a spherical seat (13) for a lower casing element (42) of the head assembly (60), and frame means (20) providing at least one spherical seat (22, 25) for the casing (40), with the frame means (20) being attached to the fixed part (32).

3. The external rear view device of claim 1 or 2, wherein
the articulation assembly (90) is surrounded by an additional bracket mounted to the fixed frame (93) or
a cradle (74) is mounted to the articulation assembly (70) to support the camera unit.

4. The external rear view device of any of the preceding claims with the camera connector (72, 74) which is positioned in a non-moving area of the moveable head assembly (60, 100) further comprising
a glass element (80) and a lens (78), wherein the camera (73) is configured to obtain a rear view image through the glass element (80) and obtain an image underneath the mirror through the lens (78).

5. The external rear view device of claim 1, further comprising
at least one casing element, in particular in form of a lower casing element (84a, 84b, 84c) and an upper casing element (83a, 83b, 83c), and a removable cassette bezel (81a, 81b, 81c), wherein the removable cassette bezel (81a, 81b, 81c) comprises a lower mating portion configured to hingedly attach to the articulation assembly or the casing element, in particular the lower casing element, with preferably an upper mating portion being configured to fit into the upper casing element.

6. The external rear view device of claim 1 or 5, further comprising
an upper cradle (71a, 85a, 85b, 85c, 91) and a lower cradle (71b, 84a, 84b, 84c, 92), and the upper cradle and the lower cradle are attached to the moveable part of the articulation assembly (70, 90).

7. The external rear view device of claim 6, further comprising
a fixed base frame (93), the fixed base frame (93) comprising a hole for receiving a joint attachment between the upper cradle (91) and the lower cradle (92), wherein the fixed base frame (93) is configured to absorb downward load applied on the external rear view device to protect the articulation assembly (90).

8. The external rear view device of claim 6, wherein
a fixed case frame (108) comprises a shape corresponding to a shape of the articulation assembly (101) so that the fixed case frame wraps around and covers a side of the articulation assembly.

## Patentansprüche

1. Außenrückblickvorrichtung für ein Motorfahrzeug, umfassend:
eine feste Basisanordnung (10, 61, 77), die zur Anordnung am Motorfahrzeug bereitgestellt ist;
eine bewegliche Kopfanordnung (60, 100), die an der Basisanordnung (10, 61, 77) befestigt ist;
eine Gelenkanordnung (30, 70, 90, 101), wobei die Gelenkanordnung einen festen Teil (32), der an der festen Basisanordnung (10, 61, 77) befestigt ist, und einen beweglichen Teil (34) umfasst, der an der Kopfanordnung (60, 100) befestigt ist; und
eine Kameraeinheit mit einer Kamera (73), die innerhalb der beweglichen Kopfanordnung (60, 100) über ein Kameraverbindungselement (72, 74) unbeweglich befestigt ist, das in einem nicht beweglichen Bereich der beweglichen Kopfanordnung (60, 100) positioniert ist, der sich nicht bewegt, wenn die bewegliche Kopfanordnung (60, 100) bewegt wird, und das die Kamera (73) aufnimmt,
wobei die Gelenkanordnung (30, 70, 90, 101) zwei Gelenkachsen umfasst, wobei die Richtungsvektoren der Gelenkachsen voneinander unabhängig sind, und die Gelenkanordnung (30, 70, 90, 101) dazu konfiguriert ist, die Rückblickvorrichtung zwischen einem äußeren Fahrzustand, einem Standard-Fahrzustand, einem Parkzustand und Positionen dazwischen einzustellen, wobei ein Aufnahmeelement (86a, 86b, 86c, 92) an ein Gehäuse montiert ist, insbesondere das untere Gehäuseelement (84a, 84b, 84c), was eine Drehbewegung nach innen/außen und nach oben/unten ermöglicht.

2. Außenrückblickvorrichtung nach Anspruch 1, wobei
die Basisanordnung (10) ferner einen Fuß (12), der einen kugelförmigen Sitz (13) für ein unteres Gehäuseelement (42) der Kopfanordnung (60) bereitstellt, und eine Rahmeneinrichtung (20) umfasst, die mindestens einen kugelförmigen Sitz (22, 25) für das Gehäuse (40) bereitstellt, wobei die Rahmeneinrichtung (20) am festen Teil (32) befestigt ist.

3. Außenrückblickvorrichtung nach Anspruch 1 oder 2, wobei
die Gelenkanordnung (90) von einer zusätzlichen Halterung umgeben ist, die an den festen Rahmen (93) montiert ist, oder ein Aufnahmeelement (74) an die Gelenkanordnung (70) montiert ist, um die Kameraeinheit zu lagern.

4. Außenrückblickvorrichtung nach einem der vorstehenden Ansprüche mit dem Kameraverbindungselement (72, 74), das in einem nicht beweglichen Bereich der beweglichen Kopfanordnung (60, 100) positioniert ist, ferner umfassend
ein Glaselement (80) und eine Linse (78), wobei die Kamera (73) dazu konfiguriert ist, ein Rückblickbild durch das Glaselement (80) zu erhalten und durch die Linse (78) ein Bild unterhalb des Spiegels zu erhalten.

5. Außenrückblickvorrichtung nach Anspruch 1, ferner umfassend mindestens ein Gehäuseelement, insbesondere in Form eines unteren Gehäuseelements (84a, 84b, 84c) und eines oberen Gehäuseelements (83a, 83b, 83c), und eine abnehmbare Kassetteneinfassung (81a, 81b, 81c), wobei die abnehmbare Kassetteneinfassung (81a, 81b, 81c) einen unteren Passabschnitt umfasst, der dazu konfiguriert ist, gelenkig an der Gelenkanordnung oder dem Gehäuseelement, insbesondere dem unteren Gehäuseelement, befestigt zu sein, wobei vorzugsweise ein oberer Passabschnitt dazu konfiguriert ist, in das obere Gehäuseelement zu passen.

6. Außenrückblickvorrichtung nach Anspruch 1 oder 5, ferner umfassend
ein oberes Aufnahmeelement (71a, 85a, 85b, 85c, 91) und ein unteres Aufnahmeelement (71b, 84a, 84b, 84c, 92), und das obere Aufnahmeelement und das untere Aufnahmeelement sind am beweglichen Teil der Gelenkanordnung (70, 90) befestigt.

7. Außenrückblickvorrichtung nach Anspruch 6, ferner umfassend einen festen Basisrahmen (93), wobei der feste Basisrahmen (93) ein Loch zur Aufnahme einer Gelenkbefestigung zwischen dem oberen Aufnahmeelement (91) und dem unteren Aufnahmeelement (92) umfasst, wobei der feste Basisrahmen (93) dazu konfiguriert ist, eine nach unten gerichtete, auf die Außenrückblickvorrichtung ausgeübte Last aufzunehmen, um die Gelenkanordnung (90) zu schützen.

8. Außenrückblickvorrichtung nach Anspruch 6, wobei
ein fester Gehäuserahmen (108) eine Form umfasst, die einer Form der Gelenkanordnung (101) entspricht, so dass das feste Gehäuse eine Seite der Gelenkanordnung umschließt und abdeckt.

## Revendications

1. Dispositif de rétroviseur externe pour un véhicule à moteur, comprenant :
un ensemble de base fixe (10, 61, 77) prévu pour un agencement sur le véhicule à moteur ;
un ensemble de tête mobile (60, 100) attaché à l'ensemble de base (10, 61, 77) ;
un ensemble d'articulation (30, 70, 90, 101), l'ensemble d'articulation comprenant une partie fixe (32) attachée à l'ensemble de base fixe (10, 61, 77) et une partie mobile (34) attachée à l'ensemble de tête (60, 100) ; et
une unité de caméra avec une caméra (73) qui est fixée de manière immobile à l'intérieur de l'ensemble de tête mobile (60, 100) par le biais d'un connecteur de caméra (72, 74) qui est positionné dans une zone non-mobile de l'ensemble de tête mobile (60, 100) qui ne se déplace pas lorsque l'ensemble de tête mobile (60, 100) est déplacé et qui reçoit la caméra (73), dans lequel l'ensemble d'articulation (30, 70, 90, 101) comprend deux axes d'articulation, les vecteurs de direction des axes d'articulation étant indépendants l'un de l'autre, et l'ensemble d'articulation (30, 70, 90, 101) est configuré pour ajuster le dispositif de rétroviseur entre une condition de conduite extérieure, une condition de conduite standard, une condition de stationnement, et des positions entre celles-ci, avec un support (86a, 86b, 86c, 92) étant monté sur un boîtier, en particulier l'élément de boîtier inférieur (84a, 84b, 84c), permettant un mouvement de rotation intérieur/extérieur et haut/bas.

2. Dispositif de rétroviseur externe selon la revendication 1, dans lequel
l'ensemble de base (10) comprend en outre un pied (12) fournissant un siège sphérique (13) pour un élément de boîtier inférieur (42) de l'ensemble de tête (60), et un moyen formant cadre (20) fournissant au moins un siège sphérique (22, 25) pour le boîtier (40), le moyen formant cadre (20) étant attaché à la partie fixe (32).

3. Dispositif de rétroviseur externe selon la revendication 1 ou 2, dans lequel
l'ensemble d'articulation (90) est entouré par un une console supplémentaire montée sur le cadre fixe (93) ou
un support (74) est monté sur l'ensemble d'articulation (70) pour supporter l'unité de caméra.

4. Dispositif de rétroviseur externe selon l'une quelconque des revendications précédentes avec le connecteur de caméra (72, 74) qui est positionné dans une zone non-mobile de l'ensemble de tête mobile (60, 100) comprenant en outre un élément de glace (80) et une lentille (78), dans lequel la caméra (73) est configurée pour obtenir une image de vision arrière à travers l'élément de glace (80) et obtenir une image en dessous du miroir à travers la lentille (78).

5. Dispositif de rétroviseur externe selon la revendication 1, comprenant en outre au moins un élément de boîtier, en particulier sous la forme d'un élément de boîtier inférieur (84a, 84b, 84c) et d'un élément de boîtier supérieur (83a, 83b, 83c), et un cadre de cassette amovible (81a, 81b, 81c), dans lequel le cadre de cassette amovible (81a, 81b, 81c) comprend une portion d'accouplement inférieure configurée pour s'attacher de manière articulée à l'ensemble d'articulation ou l'élément de boîtier, en particulier l'élément de boîtier inférieur, avec de préférence une portion d'accouplement supérieure étant configurée pour s'installer dans l'élément de boîtier supérieur.

6. Dispositif de rétroviseur externe selon la revendication 1 ou 5, comprenant en outre un support supérieur (71a, 85a, 85b, 85c, 91) et un support inférieur (71b, 84a, 84b, 84c, 92), et le support supérieur et le support inférieur sont attachés à la partie mobile de l'ensemble d'articulation (70, 90).

7. Dispositif de rétroviseur externe selon la revendication 6, comprenant en outre un cadre de base fixe (93), le cadre de base fixe (93) comprenant un trou pour recevoir une attache de joint entre le support supérieur (91) et le support inférieur (92), dans lequel le cadre de base fixe (93) est configuré pour absorber la charge vers le bas appliquée sur le dispositif de rétroviseur externe afin de protéger l'ensemble d'articulation (90).

8. Dispositif de rétroviseur externe selon la revendication 6, dans lequel un cadre de boîtier fixe (108) comprend une forme correspondant à une forme de l'ensemble d'articulation (101) de sorte que le cadre de boîtier fixe s'enveloppe autour d'un côté de l'ensemble d'articulation et couvre celui-ci.
